# FASCICULE DE BREVET EUROPEEN

(11) **EP 3 763 560 B1**
(45) Date de publication et mention de la délivrance du brevet: **15.06.2022**
(21) Numéro de dépôt: 20183347.2
(22) Date de dépôt: 01.07.2020
(51) Int. Cl.: B60N 2/02, B60N 2/58

(54) **SIÈGE DE VÉHICULE DOTÉ D'UNE ASSISE EXTENSIBLE**
FAHRZEUGSITZ, DER MIT EINER AUSZIEHBAREN SITZFLÄCHE AUSGESTATTET IST
VEHICLE SEAT PROVIDED WITH AN EXPANDABLE SEAT

(30) Priorité: 10.07.2019 FR 1907730
(43) Date de publication de la demande: 13.01.2021
(73) Titulaire: Renault s.a.s, 92100 Boulogne Billancourt (FR)
(72) Inventeur: CHHEANG, Nakry, 78470 Saint Rémy les Chevreuses (FR); LUZIER, Philippe, 78280 Guyancourt (FR)
(74) Mandataire: Renault Group

(56) Documents cités:
- DE-A1-102008 004 121
- DE-A1-102012 011 989
- FR-A1- 2 931 742
- US-A1- 2013 320 730
- US-A1- 2019 135 139

## Description

La présente invention concerne un siège de véhicule doté d'une assise extensible.

Afin de clarifier la description, il est considéré que l'assise comprend une partie principale prolongée à l'avant par un nez d'assise, ledit nez étant susceptible d'être translaté vers l'avant de ladite partie principale. Il est également supposé qu'un siège selon l'invention possède un dossier inclinable apte à pivoter autour d'un axe de rotation. De plus, il est supposé qu'un axe longitudinal du siège est un axe qui est perpendiculaire à cet axe de rotation, et qu'un axe transversal dudit siège est un axe qui est parallèle audit axe de rotation.

Certains sièges conducteurs et passagers de la 1ère rangée d'un véhicule automobile sont équipés d'un réglage de la longueur d'assise. C'est une partie avant de coussin qui se nomme également nez d'assise, qui coulisse vers l'avant. Ce dispositif est autrement connu sous le nom CLA (de l'anglais *Cushion Length Adjusting).* Pour certaines personnes, ce dispositif permet de soutenir les avants-cuisses afin de réduire la fatigue sur les longs trajets. Quand le nez d'assise est mis en position avancée, il crée un espace avec la partie principale de l'assise qui est située derrière ledit nez d'assise. Or, un tel espace nuit à l'esthétisme du véhicule, et crée une cuvette susceptible de recueillir des déchets, tels que par exemple de la poussière où des miettes.

Des mécanismes de déploiement d'un nez d'assise existent déjà. Par exemple, la demande FR2988046B1 décrit un mécanisme permettant à un nez d'assise de se déployer avec maitrise et précision, vers l'avant d'une partie principale d'assise. Or, un tel mécanisme n'empêche pas la création d'un espace entre le nez d'assise et la partie principale da l'assise, lorsque ledit nez a été déployé vers l'avant de l'assise. Le document DE102012011989 décrit aussi un siège permettant de déployer vers l'avant une partie du siège.

Lorsqu'un espace est créé entre la partie principale de l'assise et le nez d'assise, une généralement appliquée pour masquer cet espace consiste à placer une bande de tissu en cuir, ou en simili cuir, au-dessus de cet espace afin de le recouvrir. Cette bande est classique et est composée d'une pièce avec une couture au milieu, afin de faciliter son pliage quand le nez d'assise revient dans une position normale, contre la partie principale de l'assise du siège. Or, l'inconvénient majeur de cette solution, est d'ordre esthétique. En effet, la bande de tissu ne semble pas être intégrée dans le siège et apparait alors comme une pièce rapportée dégradant la qualité perçue du siège. De plus, une telle bande est conçue pour masquer l'espace, et non pas pour le combler. Elle ne facilite donc pas le nettoyage du siège, car elle n'empêche pas la poussière ou les miettes de s'accumuler dans ledit espace.

Un siège de véhicule selon l'invention est doté d'un mécanisme permettant le déploiement vers l'avant d'un nez d'assise, tout en s'affranchissant des inconvénients relevés dans l'état de la technique, notamment en empêchant la formation d'un espace entre le nez d'assise et la partie principale de l'assise.

L'invention a pour objet un siège de véhicule doté d'une assise comprenant une partie principale et un nez d'assise mobile placé à l'avant de ladite partie principale, ledit nez d'assise étant apte à passer d'une position rangée pour lequel il est au contact de la partie principale à une position avancée pour laquelle il s'est déployé par translation vers l'avant de ladite principale pour accroitre la longueur de l'assise, la partie principale et le nez d'assise étant recouverts chacun par un garnissage.

Selon l'invention :
- la partie principale et le nez d'assise définissent une ligne de jonction dans laquelle le garnissage de la partie principale et le garnissage du nez d'assise sont au contact l'un de l'autre et définissent un plan d'interface, et
- le garnissage du nez d'assise et le garnissage de la partie principale sont fixés l'un à l'autre sensiblement dans ce plan d'interface au moyen d'un élément de liaison qui est lui-même fixé aux deux garnissages, et
- au moins une bande élastique reliant un élément de structure du nez d'assise et un élément de structure de la partie principale passe par l'élément de liaison pour assurer que les deux garnissages soient tendus et restent au contact l'un de l'autre lorsque le nez d'assise se déploie vers l'avant de la partie principale.

Le principe d'un tel siège est de maintenir au contact l'un de l'autre le garnissage de la partie principale et le garnissage du nez d'assise au niveau de la ligne de jonction, lorsque le nez d'assise coulisse vers l'avant de la partie principale, de manière à empêcher l'apparition d'un espace entre les deux éléments de l'assise. Pour y parvenir, aux moins deux conditions sont nécessaires : d'une part, les deux garnissages sont fixés l'un à l'autre au niveau de la ligne de jonction de manière que lesdits garnissages ne peuvent pas se déplacer l'un par rapport à l'autre, et d'autre part, une bande élastique reliée à l'élément de liaison s'oppose à la remontée dudit élément de liaison fixé aux deux garnissages, lorsque le nez d'assise se déploie vers l'avant de la partie principale pour maintenir au contact l'un de l'autre lesdits deux garnissages. Pour résumer, un siège selon l'invention comprend un nez d'assise apte à se déployer vers l'avant de la partie principale de l'assise, sans créer le moindre espace entre ledit nez et ladite partie principale. Lorsque l'élément de liaison fixant les deux garnissages remonte en raison de l'avancée du nez d'assise, la bande élastique se tend en créant un effort s'opposant à cette remontée et contribue ainsi à maintenir au contact l'un de l'autre les deux garnissages. L'élément de liaison est avantageusement fabriqué en matière plastique. Avantageusement, la bande élastique est apte à coulisser dans l'élément de liaison. Lorsque le nez d'assise est translaté vers l'avant, la longueur du plan d'interface entre les deux garnissages diminue car le garnissage du nez d'assise est mis sous tension et contribue à remonter l'élément de liaison qui est fixé aux deux garnissages.

Selon une caractéristique possible de l'invention, le garnissage du nez d'assise présente une extrémité libre et le garnissage de la partie principale présente une extrémité libre, lesdits deux garnissages étant superposés au niveau du plan d'interface, de sorte que leurs extrémités libres soient alignées, l'élément de liaison étant placé à proximité desdites extrémités. Autrement dit, les deux garnissages définissent un plan d'interface et l'élément de liaison est placé à proximité des deux extrémités libres des deux garnissages qui se correspondent et à partir desquelles nait ledit plan d'interface.

Selon une caractéristique possible de l'invention, l'élément de liaison est un profil plastique rigide s'étendant sur au moins une partie de la largeur du nez d'assise. La largeur du nez d'assise est sa dimension considérée suivant un axe transversal du siège. De façon préférentielle, l'élément de liaison s'étend sur au moins 80% de la largeur d'assise qui est sa dimension considérée suivant un axe transversal du véhicule. Avantageusement, l'élément de liaison s'étend sur toute la largeur du nez d'assise.

Selon une caractéristique possible de l'invention, l'élément de liaison comprend au moins un trou destiné au passage de la bande élastique. Chaque bande élastique passe par un trou de l'élément de liaison et ledit élément de liaison est apte à se déplacer relativement à chacune desdites bandes élastiques.

Selon une caractéristique possible de l'invention, l'élément de liaison est cousu au garnissage de la partie principale et au garnissage du nez d'assise. La couture est un moyen de fixation parfaitement adapté à la fixation de l'élément de liaison aux deux garnissages, car ledit moyen permet notamment de bien résister à l'effort de tension généré par la bande élastique.

Selon une caractéristique possible de l'invention, le siège comprend deux bandes élastiques pour garantir que les deux garnissages soient tendus de façon homogène au niveau du plan d'interface. Puisque le plan d'interface s'étend selon un axe transversal du siège, lesdites deux bandes élastiques sont placées au niveau des deux extrémités dudit plan le long dudit axe transversal.

Selon une caractéristique possible de l'invention, chaque bande élastique est accrochée à un support de mousse du nez d'assise et à un fil d'insert de mousse de la partie principale. Le déploiement du nez d'assise va engendrer d'une part, une remontée de l'élément de liaison et donc des deux garnissages, et d'autre part une mise en tension simultanée de la bande élastique qui va s'opposer à ladite remontée pour maintenir lesdits deux garnissages l'un contre l'autre.

Selon une caractéristique possible de l'invention, chaque bande élastique est accrochée au support de mousse par l'intermédiaire d'un premier crochet et est accroché au fil d'insert par l'intermédiaire d'un deuxième crochet.

Selon une caractéristique possible de l'invention, le fil d'insert est en acier et s'étend selon un axe transversal du siège.

L'invention a pour autre objet un procédé de déploiement du nez d'assise vers l'avant de la partie principale.

Selon l'invention, le procédé comprend les étapes suivantes :
- Une étape de poussée vers l'avant du nez d'assise,
- Une étape de mise sous tension du garnissage du nez d'assise en raison de ladite poussée,
- Une étape de remontée des deux garnissages au niveau du plan d'interface engendrée par la mise sous tension mécanique du garnissage du nez d'assise, lesdits deux garnissages étant fixés l'un à l'autre par l''élément de liaison,
- Une étape de mise sous tension simultanée de la bande élastique qui va s'opposer à cette remontée pour notamment permettre aux deux garnissages de rester au contact l'un de l'autre,
- Une étape d'arrêt de ladite remontée lorsque le nez d'assise a atteint une position extrême d'avancée, ladite position correspondant à une position de l'élément de liaison quasiment à la même altitude que celle des deux garnissages en continuité l'un de l'autre.

Un siège selon l'invention présente l'avantage de posséder un nez d'assise dont le déplacement vers l'avant de la partie principale de l'assise, est précis et bien maitrisé, tout en ne créant aucun espace entre ledit nez et ladite partie principale lorsque ledit nez est en position avancée. De cette manière, un siège selon l'invention demeure aussi esthétique, que le nez d'assise soit dans une position rangée ou dans une position déployée. De plus un tel siège ne constitue plus un nid à poussière, en raison de l'absence d'un espace entre le nez d'assise et la partie principale de ladite assise. Le siège a de plus l'avantage d'empêcher la création de cet espace, grâce à un mécanisme simple impliquant un nombre restreint de pièces et qui est peu encombrant.

On donne ci-après, une description détaillée d'un mode de réalisation préféré d'un siège selon l'invention, en se référant aux figures suivantes :

[Fig. 1] est une vue en perspective d'un siège selon l'invention, le nez d'assise étant dans une position rangée,

[Fig. 2] est une vue en perspective d'un siège selon l'état de la technique, le nez d'assise étant dans une position déployée,

[Fig. 3] est une vue en perspective d'un siège selon l'invention, le nez d'assise étant dans une position déployée,

[Fig. 4] est une vue en coupe axiale longitudinale d'un siège selon l'invention, le nez d'assise étant dans une position rangée,

[Fig. 5] est une vue en coupe axiale longitudinale d'un siège selon l'invention, le nez d'assise étant dans une position déployée,

[Fig. 6] est une vue en perspective d'un siège de véhicule selon l'invention, le nez d'assise étant relevé afin de visualiser les pièces constituant le mécanisme de déploiement dudit nez d'assise,

[Fig. 7] est une vue en perspective d'une bande élastique et d'un élément de liaison d'un siège selon l'invention,

[Fig. 8] est une vue en perspective montrant deux bandes élastiques, un élément de liaison et les garnissages du nez d'assise et de la partie principale d'une assise d'un siège selon l'invention.

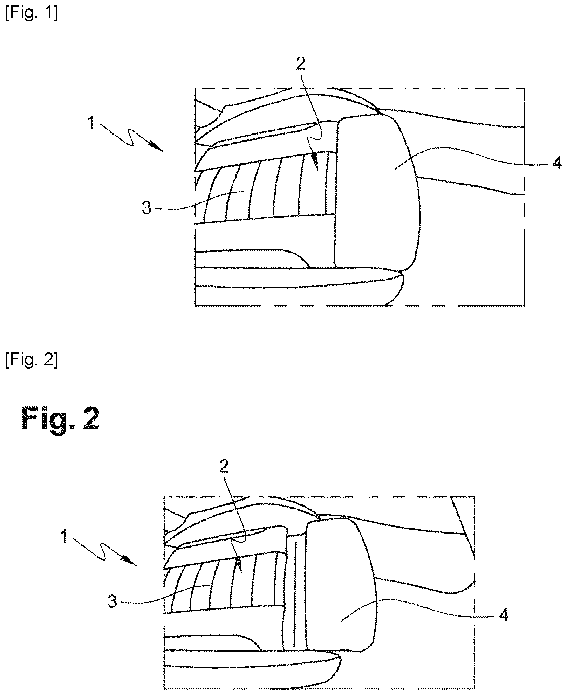

En se référant aux figures 1 et 2, certains sièges 1 de véhicule sont dotés d'une assise 2 en deux parties, comprenant une partie principale 3 et un nez d'assise 4 placé à l'avant de ladite partie principale 3. Ce nez d'assise 4 est monté mobile en translation sur la partie principale 3, de sorte qu'il puisse passer d'une position rangée comme illustrée à la figure 1 et pour laquelle il est placé contre la partie principale 3, à une position déployée comme illustrée à la figure 2 et pour laquelle il a été translaté vers l'avant de ladite partie principale 3 suivant un axe longitudinal du siège, de manière à accroitre la longueur globale de l'assise 2.

En se référant à la figure 2, pour un siège 1 de l'état de la technique, lorsque le nez d'assise 4 est dans la position déployée, il crée un espace 5 avec la partie principale 3 de l'assise 2 sous la forme d'une rainure s'étendant suivant un axe transversal du siège 1. Or, un tel espace 5 est inesthétique, car il brise l'harmonie du siège 1 et peut également constituer une cuvette susceptible de piéger de la poussière ou des miettes.

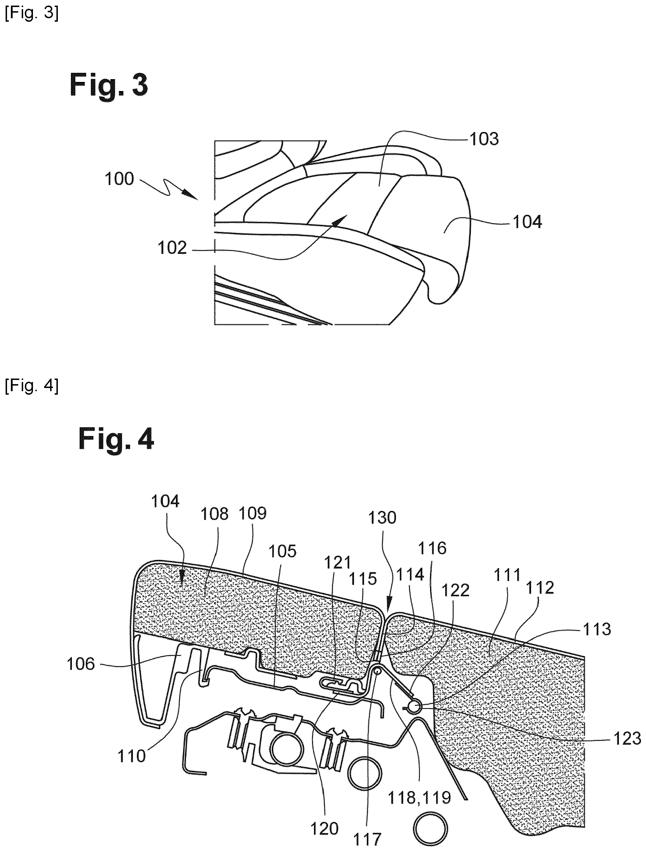

En se référant à la figure 3, un siège 100 selon l'invention est conçu de telle manière qu'il ne puisse pas créer d'espace entre le nez d'assise 104 et la partie principale 103 de l'assise 102, lorsque ledit nez d'assise 104 est dans la position déployée à l'avant de l'assise 102.

En se référant aux figures 4, 5 et 6, le nez d'assise 104 comprend schématiquement un plateau de glissière 105, un support 106 de mousse, une poignée de déverrouillage 107, de la mousse 108 et un garnissage 109. Le support de mousse 106 est fixé au plateau de glissière 105 et permet de soutenir la mousse 108 du nez d'assise 104. Le garnissage 109 est une enveloppe, qui peut par exemple être réalisée en tissu ou en cuir, et qui est destinée à entourer la mousse 108 du nez d'assise 104. Le nez de coussin est monté clipsé sur le support de mousse 106 sur une bordure du plateau de glissière 105 grâce à des crochets 110. Une pression exercée sur la poignée de déverrouillage 107 dans le bon sens permet de libérer en translation le nez d'assise 104 qui peut alors être avancé devant la partie principale 103 avec l'amplitude souhaitée. La partie principale 103 de l'assise 102 comprend également de la mousse 111, un garnissage 112 entourant ladite mousse 111 et un fil d'acier 113 d'insert de mousse s'étendant suivant un axe transversal dudit siège 100.

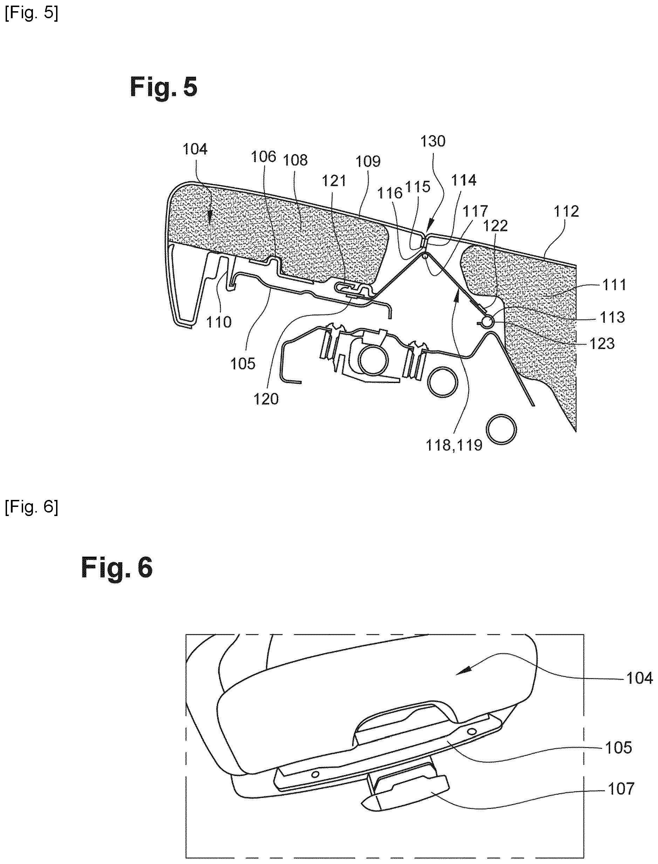

En se référant aux figures 4 et 5, le garnissage 109 du nez d'assise 104 et le garnissage de la partie principale 103 de l'assise 102 sont au contact l'un de l'autre au niveau d'une ligne de jonction 130 séparant ledit nez d'assise 104 et ladite partie principale 103, ladite ligne 130 s'étendant selon un axe transversal du siège 100. Le contact entre les deux garnissages 109, 112 est étendu de de manière à former un plan d'interface 114. Ce plan d'interface 114 est obtenu en faisant correspondre une extrémité libre 115 du garnissage 109 du nez d'assise 104 avec une extrémité libre 116 du garnissage 112 de la partie principale 103 de l'assise 102. Ce plan d'interface 114 prend naissance au niveau de ces deux extrémités 115, 116 libres superposées, et s'étend vers le haut du siège 100 sur une longueur variable en fonction de la position du nez d'assise 104 par rapport à la partie principale 103 de l'assise 102.

En se référant aux figures 4, 5, 7 et 8, les deux garnissages 109, 112 sont fixés l'un à l'autre au niveau du plan d'interface 114 par l'intermédiaire d'un élément de liaison 117 se présentant sous la forme d'une bande en plastique rigide. Cette bande 117, qui s'étend préférentiellement sur au moins 80% de la largeur du nez d'assise 104 qui est sa dimension considéré suivant un axe transversal du siège 100, est cousu aux deux garnissage 109, 112 empêchant lesdits deux garnissages 109, 112 de se déplacer l'un par rapport à l'autre. L'élément de liaison 117 est cousu aux deux garnissages 109, 112 à proximité de leurs extrémités libres 115, 116 à partir duquel prend naissance le plan d'interface 114.

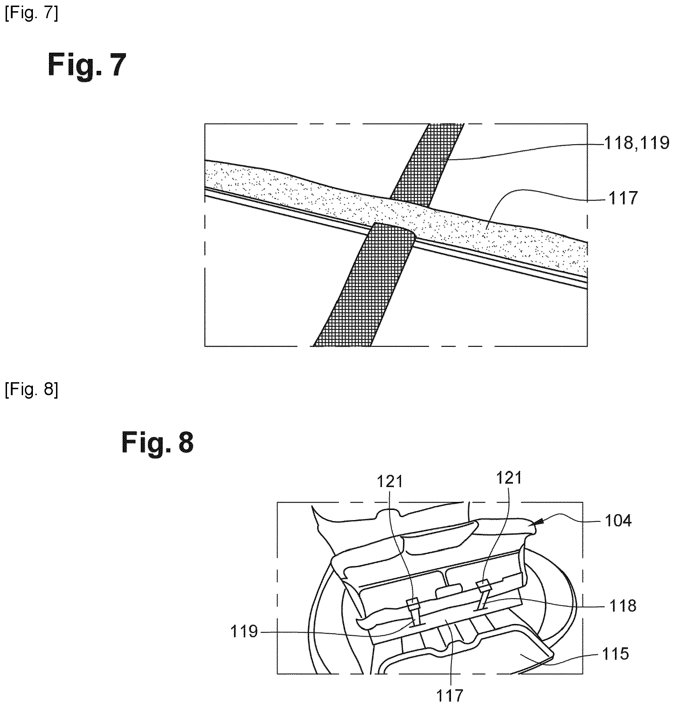

En se référant aux figures 7 et 8, l'élément de liaison 117 possède deux trous pour permettre le passage de deux bandes élastiques 118, 119, chacune desdites bandes élastiques 118, 119 possédant une première extrémité 120 fixée au support de mousse 106 du nez d'assise 104 par l'intermédiaire d'un crochet avant 121, et une deuxième extrémité 122 accrochée au fil d'acier 113 d'insert de mousse de la partie principale 103 de l'assise 102 par l'intermédiaire d'un crochet arrière 123 passant autour dudit fil en acier 113. Chaque bande élastique 118, 119 est apte à coulisser dans l'élément de liaison 117.

Un procédé de déploiement d'un nez d'assise 104 sur un siège 100 selon l'invention, comprend les étapes suivantes :
- Une étape de libération du nez d'assise 104 au moyen d'une pression exercée sur la poignée 107 de déverrouillage, cette libération permettant audit nez d'assise 104 de coulisser vers l'avant afin d'agrandir la longueur de l'assise 102. Cette étape de libération est effectuée alors que le nez d'assise 104 est dans la position rangée comme illustré à la figure 4,
- Une étape de translation vers l'avant du nez d'assise 104 entrainant une mise sous tension mécanique du garnissage 109 dudit nez d'assise 104,
- Une étape de remontée suivant une direction verticale et au niveau de la ligne de jonction 130, de l'ensemble constitué par les deux garnissages 109, 112 et l'élément de liaison 117. Cette remontée est due à l'effort de traction exercée par le garnissage 109 du nez d'assise 104 qui est en phase de déplacement vers l'avant, ladite remontée s'accompagnant d'une diminution progressive suivant une direction verticale, du plan d'interface 114 entre les deux garnissages 109, 112,
- Une étape de mise sous tension mécanique des deux bandes élastiques 118, 119 engendrée par la remontée de l'élément de liaison 117, lesdites deux bandes 118, 119 ayant tendance à s'opposer à ladite remontée. Grâce à la pression exercée par ces deux bandes mécaniques 118, 119, les garnissages 109, 112 peuvent facilement se plier au niveau du plan d'interface 114 et se retrouvent dans une configuration de tension permettant de montrer un aspect propre au niveau dudit plan d'interface 114.
- Une étape d'arrêt de la poussée vers l'avant du nez d'assise 104 lorsque celui-ci arrive dans la position déployée comme illustrée à la figure 5. Cette position déployée du nez d'assise 104 correspond à une altitude maximale de l'élément de liaison 117, qui se retrouve situé quasiment à la même altitude, en réalité légèrement en-dessous, que les garnissages 109, 112 du nez d'assise 104 et de la partie principale 103 de l'assise 102 qui sont inscrits dans un même plan horizontal.

Lorsqu'une personne souhaite replacer le nez d'assise 104 dans la position rangée, il translate ledit nez d'assise 104 en sens inverse pour le rapprocher de la partie principale 103 d'assise, et toutes les étapes précédentes s'effectuent en sens inverse. Il est à noter que les deux bandes élastiques 118, 119 contribuent à faciliter un retour du nez d'assise 104 dans la position rangée.

## Revendications

1. Siège (1, 100) de véhicule doté d'une assise (2, 102) comprenant une partie principale (3, 103) et un nez d'assise (4, 104) mobile placé à l'avant de ladite partie principale (3, 103), ledit nez d'assise (4, 104) étant apte à passer d'une position rangée pour laquelle il est au contact de la partie principale (2, 103) à une position avancée pour laquelle il s'est déployé par translation vers l'avant de ladite principale (3, 103) pour accroitre la longueur de l'assise (2, 102) , la partie principale (3, 103) et le nez d'assise (4, 104) étant recouverts chacun par un garnissage (109, 112), **caractérisé en ce que** :
- la partie principale (103) et le nez d'assise (104) définissent une ligne de jonction (130) dans laquelle le garnissage (112) de la partie principale (103) et le garnissage (109) du nez d'assise (104) sont au contact l'un de l'autre en définissant un plan d'interface (114), et
- le garnissage (109) du nez d'assise (104) et le garnissage (112) de la partie principale (103) sont fixés l'un à l'autre sensiblement dans ce plan d'interface (114) au moyen d'un élément de liaison (117) qui est lui-même fixé aux deux garnissages (109, 112), et **caractérisé en ce que** le siège comprend en outre:
- au moins une bande élastique (118, 119) reliant un élément de structure (106) du nez d'assise (104) et un élément de structure (113) de la partie principale (103) passe par l'élément de liaison (117) pour assurer que les deux garnissages (109, 112) soient tendus et restent au contact l'un de l'autre lorsque le nez d'assise (104) se déploie vers l'avant de la partie principale (103).

2. Siège de véhicule selon la revendication 1, **caractérisé en ce que** le garnissage (109) du nez d'assise (104) présente une extrémité libre (115) et le garnissage (112) de la partie principale (103) présente une extrémité libre (116), et **en ce que** lesdits deux garnissages (109, 112) sont superposés au niveau du plan d'interface (114), de sorte que leurs extrémités libres (115, 116) soient alignées, l'élément de liaison (117) étant placé à proximité desdites extrémités (115, 116).

3. Siège se véhicule selon l'une quelconque des revendications 1 ou 2, **caractérisé en ce que** l'élément de liaison (117) est un profil plastique rigide s'étendant sur au moins une partie de la largeur du nez d'assise (104).

4. Siège de véhicule selon l'une quelconque des revendications 1 à 3, **caractérisé en ce que** l'élément de liaison (117) comprend au moins un trou destiné au passage de la bande élastique (118, 119).

5. Siège de véhicule selon l'une quelconque des revendications 1 à 4, **caractérisé en ce que** l'élément de liaison (117) est cousu au garnissage (112) de la partie principale (103) et au garnissage (109) du nez d'assise (104).

6. Siège de véhicule selon l'une quelconque des revendications 1 à 5, **caractérisé en ce qu'**il comprend deux bandes élastiques (118, 119) pour garantir que les deux garnissages (109, 112) soient tendus de façon homogène au niveau du plan d'interface (114).

7. Siège de véhicule selon l'une quelconque des revendications 1 à 6, **caractérisé en ce que** chaque bande élastique (118, 119) est accrochée à un support de mousse (106) du nez d'assise (104) et à un fil d'insert (113) de mousse de la partie principale (103).

8. Siège de véhicule selon la revendication 7, **caractérisé en ce que** chaque bande élastique (118, 119) est accrochée au support de mousse (106) par l'intermédiaire d'un premier crochet (121) et est accroché au fil d'insert (113) par l'intermédiaire d'un deuxième crochet (123).

9. Siège de véhicule selon l'une quelconque des revendications 7 ou 8, **caractérisé en ce que** le fil d'insert (113) est en acier et s'étend selon un axe transversal du siège.

10. Procédé de déploiement d'un nez d'assise (104) vers l'avant de la partie principale (103), **caractérisé en ce qu'**il comprend les étapes suivantes :
- Une étape de poussée vers l'avant du nez d'assise (104),
- Une étape de mise sous tension du garnissage (109) du nez d'assise (104) en raison de ladite poussée,
- Une étape de remontée des deux garnissages (109, 112) au niveau du plan d'interface (114) engendrée par la mise sous tension mécanique du garnissage (109) du nez d'assise (104), lesdits deux garnissages (109, 112) étant fixés l'un à l'autre par l'élément de liaison (117),
- Une étape de mise sous tension simultanée de la bande élastique (118, 119) qui va s'opposer à cette remontée pour notamment permettre aux deux garnissages (109, 112) de rester au contact l'un de l'autre,
- Une étape d'arrêt de ladite remontée lorsque le nez d'assise (104) a atteint une position extrême d'avancée, ladite position correspondant à une position de l'élément de liaison (117) quasiment à la même altitude que celle des deux garnissages (109, 112) en continuité l'un de l'autre.

## Patentansprüche

1. Fahrzeugsitz (1, 100), welcher mit einer Sitzfläche (2, 102) ausgestattet ist, die einen Hauptteil (3, 103) und eine bewegliche Schenkelauflage (4, 104), die vor dem Hauptteil (3, 103) angeordnet ist, umfasst, wobei die Schenkelauflage (4, 104) dafür ausgelegt ist, sich aus einer Verstauposition, in der sie sich mit dem Hauptteil (2, 103) in Kontakt befindet, in eine vorgeschobene Position zu bewegen, in welcher sie vom Hauptteil (3, 103) aus translatorisch nach vorn ausgefahren ist, um die Länge der Sitzfläche (2, 102) zu vergrößern, wobei der Hauptteil (3, 103) und die Schenkelauflage (4, 104) jeweils mit einem Bezug (109, 112) überzogen sind, **dadurch gekennzeichnet, dass**:
- der Hauptteil (103) und die Schenkelauflage (104) eine Verbindungslinie (130) definieren, an welcher der Bezug (112) des Hauptteils (103) und der Bezug (109) der Schenkelauflage (104) sich in Kontakt miteinander befinden und dabei eine Grenzflächenebene (114) definieren, und
- der Bezug (109) der Schenkelauflage (104) und der Bezug (112) des Hauptteils (103) im Wesentlichen in dieser Grenzflächenebene (114) mittels eines Verbindungselements (117) aneinander befestigt sind, welches seinerseits an den beiden Bezügen (109, 112) befestigt ist,
und **dadurch gekennzeichnet, dass** der Sitz außerdem umfasst:
- wenigstens ein elastisches Band (118, 119), das ein Strukturelement (106) der Schenkelauflage (104) und ein Strukturelement (113) des Hauptteils (103) verbindet und durch das Verbindungselement (117) hindurchgeht, um sicherzustellen, dass die beiden Bezüge (109, 112) gespannt sind und in Kontakt miteinander bleiben, wenn die Schenkelauflage (104) vom Hauptteil (103) aus nach vorn ausgefahren wird.

2. Fahrzeugsitz nach Anspruch 1, **dadurch gekennzeichnet, dass** der Bezug (109) der Schenkelauflage (104) ein freies Ende (115) aufweist und der Bezug (112) des Hauptteils (103) ein freies Ende (116) aufweist, und dadurch, dass die beiden Bezüge (109, 112) an der Grenzflächenebene (114) derart aneinandergelegt sind, dass ihre freien Enden (115, 116) zueinander ausgerichtet sind, wobei das Verbindungselement (117) in der Nähe der Enden (115, 116) angeordnet ist.

3. Fahrzeugsitz nach einem der Ansprüche 1 oder 2, **dadurch gekennzeichnet, dass** das Verbindungselement (117) ein starres Kunststoffprofil ist, dass sich über wenigstens einen Teil der Breite der Schenkelauflage (104) erstreckt.

4. Fahrzeugsitz nach einem der Ansprüche 1 bis 3, **dadurch gekennzeichnet, dass** das Verbindungselement (117) mindestens ein Loch umfasst, das für die Durchführung des elastischen Bandes (118, 119) bestimmt ist.

5. Fahrzeugsitz nach einem der Ansprüche 1 bis 4, **dadurch gekennzeichnet, dass** das Verbindungselement (117) an den Bezug (112) des Hauptteils (103) und an den Bezug (109) der Schenkelauflage (104) angenäht ist.

6. Fahrzeugsitz nach einem der Ansprüche 1 bis 5, **dadurch gekennzeichnet, dass** er zwei elastische Bänder (118, 119) umfasst, um zu garantieren, dass die beiden Bezüge (109, 112) an der Grenzflächenebene (114) auf homogene Weise gespannt werden.

7. Fahrzeugsitz nach einem der Ansprüche 1 bis 6, **dadurch gekennzeichnet, dass** jedes elastische Band (118, 119) an eine Schaumstoffstütze (106) der Schenkelauflage (104) und an einen Schaumstoffeinlegedraht (113) des Hauptteils (103) angehängt ist.

8. Fahrzeugsitz nach Anspruch 7, **dadurch gekennzeichnet, dass** jedes elastische Band (118, 119) an die Schaumstoffstütze (106) durch einen ersten Haken (121) angehängt ist und an den Einlegedraht (113) durch einen zweiten Haken (123) angehängt ist.

9. Fahrzeugsitz nach einem der Ansprüche 7 oder 8, **dadurch gekennzeichnet, dass** der Einlegedraht (113) aus Stahl besteht und sich entlang einer Querachse des Sitzes erstreckt.

10. Verfahren zum Ausfahren einer Schenkelauflage (104) vom Hauptteil (103) aus nach vorn, **dadurch gekennzeichnet, dass** es die folgenden Schritte umfasst:
- einen Schritt des Schiebens der Schenkelauflage (104) nach vorn,
- einen Schritt des Spannens des Bezuges (109) der Schenkelauflage (104) aufgrund des Schiebens,
- einen Schritt der Bewegung der zwei Bezüge (109, 112) an der Grenzflächenebene (114) nach oben, die durch das mechanische Spannen des Bezuges (109) der Schenkelauflage (104) erzeugt wird, wobei die zwei Bezüge (109, 112) durch das Verbindungselement (117) aneinander befestigt sind,
- einen Schritt des gleichzeitigen Spannens des elastischen Bandes (118, 119), welches dieser Bewegung nach oben entgegenwirkt, um insbesondere zu ermöglichen, dass die zwei Bezüge (109, 112) in Kontakt miteinander bleiben,
- einen Schritt des Stoppens der Bewegung nach oben, wenn die Schenkelauflage (104) eine äußerste vorgeschobene Position erreicht hat, wobei diese Position einer Position des Verbindungselements (117) entspricht, die sich praktisch auf derselben Höhe wie diejenige der zwei miteinander fluchtenden Bezüge (109, 112) befindet.

## Claims

1. Vehicle seat (1, 100) provided with a seat pan (2, 102) comprising a main portion (3, 103) and a movable seat pan nose (4, 104) placed at the front of said main portion (3, 103), said seat pan nose (4, 104) being able to pass from a stowed position in which it is in contact with the main portion (2, 103) to an advanced position in which it is deployed by translation towards the front of said main portion (3, 103) in order to increase the length of the seat pan (2, 102), the main portion (3, 103) and the seat pan nose (4, 104) being each upholstered with a cover (109, 112), **characterized in that**:
- the main portion (103) and the seat pan nose (104) define a junction line (130) at which the cover (112) of the main portion (103) and the cover (109) of the seat pan nose (104) are in contact with one another, defining an interface plane (114), and
- the cover (109) of the seat pan nose (104) and the cover (112) of the main portion (103) are attached to one another substantially in this interface plane (114) by means of a connecting element (117) which is itself attached to the two covers (109, 112), and
**characterized in that** the seat further comprises:
- at least one elastic strip (118, 119) connecting a structural element (106) of the seat pan nose (104) and a structural element (113) of the main portion (103) passes through the connecting element (117) in order to ensure that the two covers (109, 112) are taut and remain in contact with one another when the seat pan nose (104) is deployed towards the front of the main portion (103).

2. Vehicle seat according to Claim 1, **characterized in that** the cover (109) of the seat pan nose (104) has a free end (115) and the cover (112) of the main portion (103) has a free end (116), and **in that** said two covers (109, 112) overlap at the interface plane (114) in such a way that their free ends (115, 116) are aligned, the connecting element (117) being placed close to said ends (115, 116).

3. Vehicle seat according to either one of Claims 1 and 2, **characterized in that** the connecting element (117) is a rigid plastic profile extending over at least part of the width of the seat pan nose (104).

4. Vehicle seat according to any one of Claims 1 to 3, **characterized in that** the connecting element (117) comprises at least one hole intended for the elastic strip (118, 119) to pass through.

5. Vehicle seat according to any one of Claims 1 to 4, **characterized in that** the connecting element (117) is sewn onto the cover (112) of the main portion (103) and onto the cover (109) of the seat pan nose (104) .

6. Vehicle seat according to any one of Claims 1 to 5, **characterized in that** it comprises two elastic strips (118, 119) in order to ensure that the two covers (109, 112) are tautened evenly at the interface plane (114) .

7. Vehicle seat according to any one of Claims 1 to 6, **characterized in that** each elastic strip (118, 119) is hooked onto a foam support (106) of the seat pan nose (104) and onto a foam insert wire (113) of the main portion (103).

8. Vehicle seat according to Claim 7, **characterized in that** each elastic strip (118, 119) is hooked onto the foam support (106) via the intermediary of a first hook (121), and is hooked onto the insert wire (113) via the intermediary of a second hook (123).

9. Vehicle seat according to either one of Claims 7 and 8, **characterized in that** the insert wire (113) is made of steel and extends along a transverse axis of the seat.

10. Method for deploying a seat pan nose (104) towards the front of the main portion (103), **characterized in that** it comprises the following steps:
- a step of pushing the seat pan nose (104) towards the front,
- a step of tensioning the cover (109) of the seat pan nose (104) as a consequence of said push,
- a step of the two covers (109, 112) rising up at the interface plane (114), this being caused by the mechanical tensioning of the cover (109) of the seat pan nose (104), said two covers (109, 112) being attached to one another by the connecting element (117),
- a step of simultaneous tensioning of the elastic strip (118, 119) which counters this rising in order in particular to allow the two covers (109, 112) to remain in contact with one another,
- a step of stopping said rising when the seat pan nose (104) has reached an advanced end position, said position corresponding to a position of the connecting element (117) approximately at the same height as that of the two covers (109, 112) that are in continuity with one another.
